Europäisches Patentamt

European Patent Office

Office européen des brevets

(19)

(11) EP 0 649 001 B1

(12) **FASCICULE DE BREVET EUROPEEN**

(45) Date de publication et mention
de la délivrance du brevet:
**22.04.1998 Bulletin 1998/17**

(51) Int Cl.6: **G01B 11/30**, B21B 37/00,
B21B 38/02

(21) Numéro de dépôt: **94470029.3**

(22) Date de dépôt: **05.09.1994**

(54) **Procédé de mesure de la forme et/ou de la planéité d'un matériau en défilement, et dispositif pour sa mise en oeuvre**

Vorrichtung und Verfahren zum Messen der Form oder/und der Flachheit eines sich bewegenden Materials

Procedure to measure the form and/or evenness of a moving material and device for its execution

(84) Etats contractants désignés:
**BE DE ES GB IT NL SE**

(30) Priorité: **17.09.1993 FR 9311254**

(43) Date de publication de la demande:
**19.04.1995 Bulletin 1995/16**

(73) Titulaires:
• **GTS INDUSTRIES**
**F-59760 Grande-Synthe (FR)**
• **SOCIETE ANONYME DES FORGES ET ACIERIES DE DILLING**
**D-66748 Dillingen (DE)**

(72) Inventeurs:
• **Jeuniaux, François**
**54560 - Sancy (FR)**
• **Malhomme, Marc**
**120 rue de Douai, F-59340 Dunkerque (FR)**
• **Moretti, Jean-Marc**
**F-59240 Dunkerque (FR)**
• **Haralamb, Gérard**
**D-66793 Dillingen (DE)**

(74) Mandataire: **Ventavoli, Roger**
**TECHMETAL PROMOTION**
**Immeuble Pacific**
**11-13, cours Valmy**
**La Défense 7 -TSA 10001**
**92070 PARIS LA DEFENSE CEDEX (FR)**

(56) Documents cités:
WO-A-93/16353    DE-A- 1 935 742
DE-A- 3 124 297

**Description**

L'invention concerne la mesure de la forme et/ou de la planéité des matériaux en défilement, notamment des tôles et des bandes métalliques au cours de leur laminage.

Une tôle ou une bande métallique, notamment en acier, venant d'être laminée, est dite "plate" si sa surface ne présente pas de déviations macroscopiques par rapport à un plan horizontal, lorsque le produit est déposé sur ce plan et n'est soumis à aucune autre force que son propre poids. Si, dans ces conditions, des déviations de sa surface sont observées, on dit alors que ce produit présente un défaut de planéité. Les défauts de planéité sont dit "développables" lorsqu'ils correspondent à de simples déformations pour lesquelles toutes les fibres superficielles de la bande conservent sensiblement la même longueur que la fibre centrale de la bande (c'est-à-dire la fibre superficielle située au milieu de la bande). Les défauts dits "non développables" se traduisent par des différences de longueur significatives à leur niveau entre les diverses fibres superficielles et la fibre centrale de la bande. Ils sont provoqués par un défaut d'homogénéité de la réduction d'épaisseur du produit sur la largeur de la bande, dû par exemple à une concavité ou une convexité exagérées des cylindres de laminage. Les défauts de planéité les moins graves peuvent être corrigés lors des étapes ultérieures du laminage, par exemple par une planeuse pour les tôles fortes ou un laminoir écrouisseur pour les bandes laminées à froid. Il est cependant important de détecter ces défauts dès leur formation afin de remédier rapidement aux problèmes qui les provoquent.

On quantifie la non-planéité d'une bande de la manière suivante. Sur une distance donnée L mesurée dans un plan de référence, on considère la longueur $L + \Delta L$ d'une fibre longitudinale de la bande (selon la direction de laminage), et on calcule le rapport $A_m = \frac{\Delta L}{L}$. Ce rapport définit le "taux d'allongement" de la fibre par rapport à une fibre non voilée qui serait située dans le plan de référence. Plus ce taux est important, plus le défaut de planéité est prononcé. Une autre grandeur intéressante à calculer est l'"indice de planéité" $P_m$ d'une fibre superficielle de la bande. Si on considère $A_m$ le taux d'allongement de cette fibre superficielle et $A_c$ le taux d'allongement de la fibre centrale, on pose $P_m = \frac{(A_m - A_c)}{A_c}$. Un indice de planéité $P_m$ non nul implique un taux d'allongement différent entre la fibre superficielle et la fibre médiane, ce qui traduit le caractère non développable du défaut de planéité détecté.

Une détermination satisfaisante du taux d'allongement et de l'indice de planéité d'une fibre n'est pas concevable sans une mesure précise de la forme de cette fibre. L'obtention préalable, sinon de cette forme elle-même, au moins des données qui permettent d'y parvenir, est donc nécessaire avant tout calcul relatif à la planéité de la fibre. Dans la pratique, la plupart des dispositifs de mesure de planéité donnent également accès à la forme de la fibre, profitant du fait que les données à recueillir sont les mêmes pour les deux fonctions. En fait, pour passer d'une fonction à l'autre, on n'a qu'à modifier quelques étapes finales dans le traitement de ces données.

Classiquement, on accède à la forme et/ou à la planéité d'une tôle ou d'une bande en disposant une batterie de télémètres au-dessus du produit, selon une droite transversale par rapport à sa direction de défilement. Chacun de ces télémètres mesure périodiquement l'altitude d'une fibre longitudinale superficielle du produit au fur et à mesure de son défilement. En mémorisant les résultats des mesures et en les associant à la vitesse de défilement du produit, on obtient une image approximative de la forme de la fibre, assimilée à une suite de segments de droite. A partir des données ainsi recueillies, on peut également calculer une mesure approchée de la longueur de ladite fibre. L'inconvénient de ce mode opératoire est que, en fait, l'altitude de la fibre superficielle à un instant donné est conditionnée non seulement par sa forme propre, mais encore par l'amplitude des mouvements vibratoires du produit qui s'ajoutent à son mouvement de translation. Ces mouvements vibratoires ont une composante purement verticale, et aussi une composante angulaire, résultat d'amorces de rotation du produit (cabrage par exemple). Ils provoquent, entre deux mesures, un déplacement de la fibre qui n'a rien à voir avec la forme propre de la fibre et la planéité du produit, mais qui est pourtant pris en compte par le télémètre. Ces déplacements parasites entachent généralement d'une erreur très notable les mesures de la forme et de la longueur de la fibre et, par conséquent, celle de son taux d'allongement A. Cependant, si on cherche principalement à connaître non le taux d'allongement de la fibre, mais son indice de planéité $P_m$, cette méthode peut donner des résultats acceptables, car les erreurs de mesure sur $A_c$ et $A_m$ tendent à se compenser lors du calcul de $P_m$.

Une amélioration de ce procédé (voir le document DE-A-3124297) consiste à utiliser, pour évaluer la forme et la longueur d'une fibre donnée, non pas un mais deux télémètres décalés d'une distance $\Delta x$ connue, qui effectuent simultanément la mesure de l'altitude de la fibre à leur verticale. Si la différence entre les altitudes mesurées simultanément par les deux télémètres est appelée $\Delta h$, on évalue (par défaut) la longueur $\Delta l$ de la fibre entre les deux télémètres à $\Delta l = \sqrt{\Delta h^2 + \Delta x^2}$. En sommant les $\Delta l$ mesurés, on a accès à une évaluation de la longueur totale de la fibre qui s'affranchit des incertitudes dues à la composante purement verticale des déplacement du produit. Mais la composante angulaire vient toujours fausser les mesures.

Le document DE-A-1935742 propose un procédé et un dispositif de mesure de l'allongement de différentes fibres d'une bande laminée, dont le principe est analogue au précédent. Les mesures de longueur y sont toutefois obtenues par des dispositifs magnétiques et non optiques.

Un autre procédé consiste (voir le document JP 62-172210) à utiliser un procédé de coupe optique où le produit est éclairé par trois plans laser inclinés qui coupent une fibre donnée en trois points A, B, C, et dont les images sont recueillies par une caméra linéaire à éléments photosensibles (caméra CCD). La mesure de planéité est fondée sur un indice ε prenant en compte les distances AB, BC et AC, calculées d'après les images recueillies par la caméra CCD, selon $\varepsilon = \frac{AB + BC - AC}{AC}$

Cet indice ε est comparable au taux d'allongement Am précédent et a l'avantage de ne pas faire intervenir de plan de référence indépendant du produit dans son calcul. Il n'est toutefois valable que si le défaut détecté a la même longueur d'onde sur toute la largeur du produit, ce qui n'a rien d'assuré. De plus, il nécessite d'avoir une connaissance rigoureuse de la distance entre les points de mesure, ce que le matériel actuellement disponible ne permet pas d'obtenir de manière satisfaisante.

Le but de l'invention est de proposer une méthode plus fiable et plus précise que les précédentes pour évaluer la forme et/ou la planéité d'une tôle ou d'une bande en défilement.

A cet effet, l'invention a pour objet un procédé de mesure de la forme d'une fibre longitudinale d'une bande en défilement, telle qu'une bande métallique en cours de laminage, selon lequel on relève la vitesse de défilement (V(t)) de ladite bande et les altitudes ($y_i$) d'un ensemble de n points de rang (i) de ladite fibre dans un référentiel (xOy) prédéterminé, dont l'axe (Ox) est orienté selon la direction de défilement de ladite bande, et on détermine à partir desdites altitudes ($y_i$) et de ladite vitesse (V(t)) une fonction (y(l)) dépendante de la forme de ladite fibre, caractérisé en ce que, lorsqu'on relève l'altitude du point de rang (i) de ladite fibre, situé à une distance (l) du point de rang 1 de ladite fibre mesurée sur l'axe (Ox), on relève simultanément les altitudes d'au moins deux autres points qui lui sont proches et sont situés de part et d'autre de lui, on calcule approximativement à l'aide desdites altitudes la courbure (K $(x)_i$) de ladite fibre au voisinage dudit point de rang i, puis à l'aide des courbures calculées pour lesdits points, on détermine une fonction (k(l)) représentative de l'évolution de la courbure de ladite fibre entre lesdits points de rang 1 et de rang n, et par intégrations successives de ladite fonction (k(l)), on détermine une fonction (Y(l)) représentative de la forme propre de ladite fibre entre lesdits points de rang 1 et de rang n.

L'invention a également pour objet un procédé de mesure de la planéité d'une fibre longitudinale d'une bande en défilement, telle qu'une bande métallique en cours de laminage, selon lequel on relève la vitesse de défilement de ladite bande, et les altitudes ($y_i$) d'un ensemble de n points de rang (i) de ladite fibre dans un référentiel (xOy) prédéterminé, dont l'axe (Ox) est orienté selon la direction de défilement de ladite bande, et on calcule approximativement d'après ces relevés la longueur (L) de ladite fibre entre le point de rang 1 et le point de rang n et la longueur (Lo) de sa projection sur ledit axe (Ox), et on calcule le taux d'allongement

$$\left[ A_m \ = \ \frac{L - Lo}{Lo} \right]$$

de ladite fibre représentatif de sa planéité, caractérisé en ce qu'on détermine ladite fonction k(l) comme exposé précédemment, et on calcule la longueur (L) de ladite fibre entre lesdits points de rang 1 et de rang n par intégrations successives de ladite fonction k(l).

L'invention a également pour objet des dispositifs permettant la mise en oeuvre de ces procédés, ou seulement de l'un d'entre eux, incluant notamment des moyens pour relever les altitudes ($y_i$) d'un ensemble de n points de rang i de ladite fibre, et des moyens pour relever simultanément les altitudes de au moins deux autres points de ladite fibre encadrant chaque point de rang i, rendant ainsi possible le calcul de la courbure $K(x)_i$ de ladite fibre au voisinage de chaque point de rang i.

Comme on l'aura compris, l'invention consiste à mesurer la forme et/ou la longueur d'une fibre du produit non plus en assimilant celle-ci à une suite de segments de droite, mais à une suite de segments de courbe, dont les courbures calculées approchent au mieux les courbures réelles des segments correspondants de la fibre. On obtient ainsi une représentation de la forme et une mesure de la longueur de la fibre d'une bien meilleure précision, particulièrement lorsque les défauts de planéité ont une faible longueur d'onde. Ceci est possible grâce à l'utilisation d'un télémètre à trois points de mesure ou d'un dispositif équivalent. Ce faisant, on s'affranchit des influences néfastes pour la précision de la mesure des composantes verticale et angulaire du déplacement du produit.

L'invention sera mieux comprise à la lecture de la description qui suit, faisant référence aux figures annexées suivantes :

- la figure 1 qui schématise le principe de la mesure de la longueur et/ou de la planéité d'une portion d'une fibre d'une bande en défilement, qui est à la base du procédé selon l'invention ;

- la figure 2 qui schématise un exemple de dispositif pour la mise en oeuvre du procédé selon l'invention.

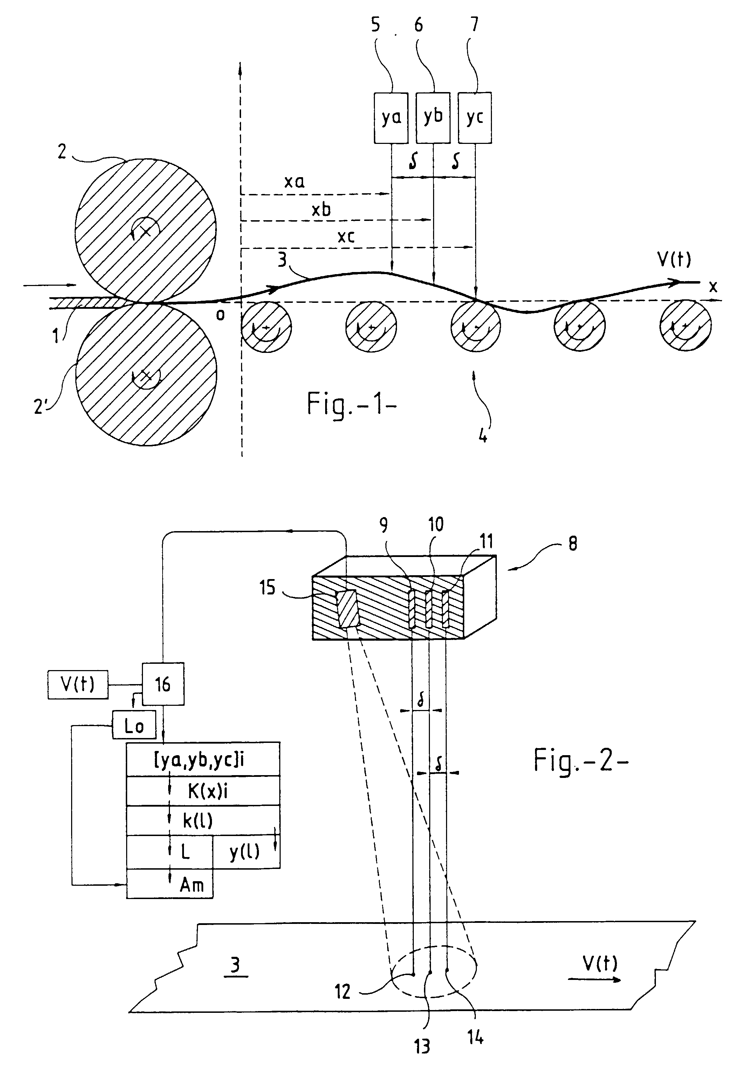

La figure 1 représente très schématiquement le principe de la méthode de mesure de la longueur et/ou de la planéité d'une bande selon l'invention. Elle montre en coupe longitudinale selon un plan vertical une tôle 1 qui pénètre et progresse dans l'entrefer de deux cylindres de laminoir 2, 2' en rotation pour y être laminée. Elle ressort de l'entrefer sous forme d'une bande 3 d'épaisseur plus faible, défilant sur une table à rouleaux 4. Sur la figure 1, on montre que la fibre longitudinale de la bande 3 qui est située dans le plan de coupe présente un défaut de planéité (d'amplitude évidemment très exagérée pour les besoins de la démonstration). La figure 1 montre également un référentiel xOy dans lequel les mesures dont on va parler seront effectuées. L'axe Ox de ce référentiel est situé dans le plan de coupe de la figure 1. Il est, par exemple, confondu avec ce qui serait la trajectoire nominale de la fibre longitudinale de la bande 3 située dans ce plan de coupe, si cette fibre était rigoureusement rectiligne. L'axe Oy est un axe perpendiculaire à Ox et inclus dans le plan de coupe. Selon l'invention, on dispose, au-dessus de la fibre de la bande 3 considérée, un ensemble de trois instruments de mesure 5, 6, 7 dont les axes de mesure, de préférence équidistants d'une longueur $\delta$, permettent d'obtenir respectivement les altitudes $y_a$, $y_b$, $y_c$ de trois points de la fibre dans le référentiel xOy. Ces points sont eux-mêmes situés respectivement à des distances $x_a$, $x_b$, $x_c$ du point O choisi arbitrairement comme origine du repère, avec $x_c\text{-}x_b = x_b\text{-}x_a = \delta$.

Comme on va l'expliquer, les mesures effectuées par ces instruments vont rendre possible le calcul avec une approximation satisfaisante de la forme et de la longueur totale de la fibre qui a défilé dans la zone de mesure entre deux instants donnés.

On pose pour hypothèse que la courbure de la fibre est uniforme lors d'une mesure dans la zone considérée. Cette approximation est acceptable car les défauts de planéité de la bande 3, si on les considère approximativement comme des sinusoïdes, ont une grande longueur d'onde (généralement entre 750 et 3000 mm), et la distance à séparant les axes de mesure des instruments 5, 6, 7 est comparativement faible, de l'ordre de quelques dizaines de mm. La courbure k(x) de la fibre est définie mathématiquement par :

$$k(x) = \frac{\dfrac{d^2 y}{dx^2}}{\left(1 + \dfrac{d^2 y}{dx^2}\right)^{3/2}}$$

Deux mesures de la dérivée de la fonction y = f(x) dans la zone de mesure à l'instant de mesure sont :

$$\frac{dy}{dx} = \frac{y_c\text{-}y_b}{\delta} \quad \text{et} \quad \frac{dy}{dx} = \frac{y_b\text{-}y_a}{\delta}$$

On mesure également la vitesse de variation de cette dérivée dans la zone de mesure, soit

$$\frac{d^2 y}{dx^2} = \frac{d\left(\dfrac{dy}{dx}\right)}{dx} = \frac{1}{\delta}\left[\frac{y_c - y_b}{\delta} - \frac{y_b - y_a}{\delta}\right]$$

soit :

$$\frac{d^2 y}{dx^2} = \frac{1}{\delta^2}(y_c - 2\,y_b + y_a)$$

Une mesure approximative K(x) de la courbure de la fibre dans la zone de mesure d'après les relevés des trois télémètres est donc :

$$K(x) = \frac{\dfrac{1}{\delta^2}(y_c - 2y_b - + y_a)}{\left(1 + \dfrac{1}{\delta^2}(y_c - 2y_b + y_a)\right)^{3/2}}$$

Comme, dans la pratique, le rayon de courbure d'une fibre est très grand par rapport à $\delta$ et aux variations de y mesurées, on peut négliger $\frac{d^2y}{dx^2}$ par rapport à 1, et admettre que :

$$k(x) \approx \frac{d^2y}{dx^2}$$

et

$$K(x) = \frac{1}{\delta^2} (y_c - 2y_b + y_a)$$

On réalise ainsi une série de n échantillonnages de rang i permettant d'acquérir des triplets $(y_a, y_b, y_c)_i$, et séparés par des intervalles de temps qui sont fonction de la vitesse de défilement de la bande 3. On obtient ainsi un fichier de mesures permettant de déterminer, pour chaque échantillonnage de rang i :

- l'altitude $y_i$ de la fibre dans le repère xOy : cette altitude est prise comme étant égale à $y_b$, c'est-à-dire l'altitude du point central de la zone de mesure prise en compte lors de l'échantillonnage de rang i ;
- la courbure $K(x)_i$ de la fibre dans cette zone de mesure centrée sur le point d'altitude $y_b$, prise comme étant égale à

$$K(x)_i = \frac{1}{\delta^2} (y_c - 2 y_b + y_a).$$

Connaissant l'intervalle de temps entre chaque échantillonnage ainsi que la vitesse V(t) de la bande 3 entre ces échantillonnages, le fichier de mesures permet d'obtenir, à partir des altitudes $y_i$, comme dans les procédés connus de mesure de la forme et de la planéité d'une fibre, une fonction y = f(l) représentative de l'évolution de l'altitude mesurée de la fibre sur la portion de la bande 3 qui a défilé sous les instruments de mesure 5, 6, 7 entre le premier échantillonnage (de rang 1) et le dernier échantillonnage pris en compte (de rang n). La grandeur l est définie comme suit. On appelle Lo la longueur de ladite portion de la bande 3, et on la prend égale à la longueur de la projection de la fibre sur l'axe Ox. Lo est donc la même pour toutes les fibres de la bande 3, et représente la longueur de référence de la bande 3, par rapport à laquelle sont calculés les taux d'allongements des différentes fibres. l, compris entre O et Lo, représente à un instant donné la longueur de référence de la bande 3 qui a défilé sous les instruments de mesure 5, 6, 7 depuis le premier échantillonnage. Mais contrairement aux procédés connus, selon l'invention ce n'est pas directement à partir de cette fonction y(l) qu'on va obtenir la forme et la planéité de la fibre. On va, à cet effet, passer par l'intermédiaire d'une fonction k(l) représentative de l'évolution de la courbure de la fibre sur la portion de la bande considérée, et obtenue similairement à y(l), à partir des courbures locales calculées $K(x)_i$ et la vitesse V(t). On a ainsi :

$$k(l) = \frac{d^2y(l)}{dl^2},$$

Y(l) étant une fonction représentative des variations d'altitude de la fibre dues uniquement aux variations de la courbure de la fibre, et indépendante (contrairement à y(l)) des variations d'altitude qui ne seraient dues qu'à des mouvements verticaux ou angulaires de la bande 3.

Une première intégration numérique de la fonction k(l) permet de remonter jusqu'à la dérivée de la fonction Y(l) :

$$\frac{dY}{dl} = \int k(l) \, dl$$

Par une deuxième intégration, on peut déduire la longueur L de la fibre selon la formule classique donnant la longueur d'un arc de courbe Y = f(l)

$$L = \int_0^{Lo} \sqrt{1 + \left(\frac{dY}{dl}\right)^2} \, dl$$

Et on en déduit le taux d'allongement $A_m$ de la fibre selon :

$$A_m = \frac{L-Lo}{Lo}$$

On a également accès à la fonction Y(l) qui permet de remonter à la forme même de la fibre, et cette fonction Y (l) peut être restituée à l'opérateur, par exemple sous la forme d'une image s'inscrivant sur un écran.

La fonction y(l) n'est ici qu'un intermédiaire de calcul pour la détermination de la forme et du taux d'allongement de la fibre, il peut néanmoins être intéressant de la connaître pour en déduire l'influence des mouvements parasites du produit en la comparant à Y(l).

On a raisonné jusqu'à présent sur des mesures réalisées à l'aide d'un ensemble de trois instruments de mesure 5, 6, 7, mais on pourrait les réaliser avec un nombre supérieur d'instruments pour avoir une précision encore meilleure sur le calcul de la courbure de la fibre. De préférence, ces instruments devraient être en nombre impair, de façon à ce que la zone de mesure prise en compte présente une symétrie par rapport au point choisi comme référence pour la détermination de l'altitude de la fibre.

Pour évaluer la forme et la planéité de la bande 3 sur l'ensemble de sa largeur, il faut disposer au-dessus d'elle une pluralité d'ensembles d'instruments tels que celui qui a été décrit, de façon à déterminer le taux d'allongement $A_m$ d'une multiplicité de fibres. Si, parmi ces fibres, se trouve la fibre centrale de la bande dont le taux d'allongement est $A_c$, on peut, de plus, calculer l'indice de planéité $P_m = \frac{A_m - A_c}{A_c}$ de chacune des autres fibres.

Un autre avantage des procédés selon l'invention est que, comme les calculs sont effectués à partir d'altitudes $y_a$, $y_b$, $y_c$ toutes relevées au mêmes instant, et que l'on ne raisonne que sur les différences entre ces altitudes, on s'affranchit également des erreurs qui seraient dues à une légère variation de la position du télémètre par rapport à la bande 3. De telles variations peuvent se produire, par exemple, en cas d'une dilatation du support du télémètre sous l'effet du rayonnement de la bande chaude. Il suffit que les distances entre les axes de mesure des instruments 5, 6, 7 demeurent constantes dans le temps.

On va, à présent, décrire un exemple de réalisation pratique d'un appareillage pour la mise en oeuvre des procédés selon l'invention, tel que représenté sur la figure 2.

Cette réalisation repose sur le principe connu de la mesure d'une distance ou de sa variation par triangulation d'image. On envoie un faisceau lumineux généré par une source laser sur la surface d'un objet, et on recueille l'image de l'impact du faisceau sur cette surface par un récepteur optique tel qu'une caméra à diodes. Après étalonnage, on peut déduire des déplacements de l'image dans le récepteur la valeur des variations d'altitude de cet impact.

Le mode de réalisation représenté schématiquement sur la figure 2 repose sur l'utilisation d'un télémètre 8 maintenu au-dessus de la bande 3 par un support non représenté, et comportant, enfermés dans un boîtier représenté en coupe :

- trois lasers 9, 10, 11 dont les faisceaux sont parallèles, espacés d'une distance $\delta$, et dirigés sur la surface de la bande 3 de manière à produire sur l'une de ses fibres longitudinales trois impacts 12, 13, 14 alignés dans la direction de déplacement de la bande 3 qui défile à une vitesse connue à tout instant et éventuellement variable V(t) ;
- une caméra linéaire 15 telle qu'une caméra CCD orientée sur lesdits impacts 12, 13, 14, et dont le champ est suffisamment large pour les englober tous, quelles que soient leurs altitudes, compte tenu des déformations et des déplacements possibles de la bande 3.

La caméra 15 est connectée à un module de calcul 16 auquel elle transmet les informations qu'elle recueille sur la position des impacts 12, 13, 14. Le module de calcul 16 est muni d'une horloge qui commande la périodicité de l'échantillonnage de ces informations. Il enregistre également à tout instant la valeur de la vitesse V(t) de défilement de la bande 3. Pour chaque échantillonnage de mesures de rang i, par comparaison entre les données recueillies par la caméra 15 sur les positions des impacts 12, 13, 14 et les données recueillies lors d'une phase d'étalonnage préalable qu'il a conservées en mémoire, le module de calcul peut déterminer les altitudes respectives $[y_a, y_b, y_c]_i$ des impacts 12, 13, 14, telles qu'on les a définies précédemment. A partir de ces échantillonnages, dont les n derniers sont conservés en mémoire, le module de calcul effectue les opérations mathématiques précédemment décrites. Celles-ci conduisent au calcul des courbures $K(x)_i$ de la fibre au niveau des différents points de mesure de la longueur L de la fibre de la bande 3 qui a défilé devant le télémètre entre les échantillonnages de rang 1 à n, de la longueur de référence Lo déduite de V(t). Puis la fonction k(l) est déterminée, et ensuite soit la fonction Y(l), soit la longueur L et le taux d'allongement $A_m$ de la fibre, soit ces deux données. L'une au moins de ces données est restituée à l'opérateur chargé de la conduite du laminoir, afin qu'il se rende compte de la présence d'éventuels défauts de planéité sur la fibre examinée. Optimalement elles sont transmises aussi à l'installation de régulation des conditions de laminage, pour qu'elle commande l'exécution des actions qui permettront de remédier à ces défauts.

Dans la pratique, des lasers He-Ne de 5 mW chacun disposés à environ 2 m au-dessus de la bande peuvent être utilisés. L'espacement $\delta$ des faisceaux lasers est, par exemple, de 50 mm. Les échantillonnages sont espacés dans le temps par l'horloge de telle sorte qu'une longueur de produit approximativement équivalente à cet espacement δ défile devant les télémètres entre deux échantillonnages.

Comme on l'a dit, de préférence plusieurs télémètres 8 possédant chacun leur unité de calcul 16 (ou reliés à une même unité de calcul traitant et restituant séparément les données qu'ils transmettent) doivent être répartis sur la largeur de la bande 3, pour évaluer la forme et la planéité de plusieurs fibres. On peut ainsi obtenir une image globale de la planéité de la bande, en prenant en compte de préférence la fibre centrale pour rendre possible, en plus, le calcul de l'indice de planéité $P_m$ de chaque fibre selon $P_m = \frac{A_m - A_c}{A_c}$ ($A_c$ étant le taux d'allongement de la fibre centrale). On peut, optimalement, prévoir que les télémètres puissent être déplaçables sur leur support selon une direction transversale à la direction de déplacement de la bande 3, afin de pouvoir mesurer la planéité de n'importe quelle fibre de la bande 3. On peut ainsi évaluer l'étendue latérale exacte d'un défaut de planéité, et identifier la fibre sur laquelle son amplitude est la plus forte.

On aura bien compris, à la lecture de cette description, que les différents procédés selon l'invention sont fondés sur la même idée de départ, à savoir qu'une fibre longitudinale d'une bande en mouvement peut être décrite à partir de relevés de sa courbure en différents points, de manière à s'affranchir des mouvements erratiques de la bande. C'est à partir de ces relevés que l'on peut calculer selon les voeux de l'utilisateur soit la forme propre de la fibre, soit sa longueur et, partant, les paramètres classiques représentatifs de sa planéité, soit, de préférence, toutes ces grandeurs à la fois. De même, on aura compris que les différents dispositifs unitaires selon l'invention ne diffèrent que par le mode de programmation des derniers étages du module de calcul 16 et que, là encore selon les voeux de l'utilisateur, ces dispositifs peuvent être aisément adaptés à la mise en oeuvre de l'un seulement de ces procédés, ou des deux simultanément.

Bien entendu, l'invention n'est pas limitée à l'exemple de réalisation qui vient d'être décrit. En particulier, d'autres moyens de mesure des grandeurs $y_a$, $y_b$, $y_c$ que des télémètres à triangulation d'image peuvent être utilisés. De plus, elle n'est pas limitée à la mesure de la forme et de la planéité d'une tôle ou d'une bande d'acier en défilement, mais peut concerner la mesure de la forme et de la planéité de tout matériau en défilement, métallique ou non.

**Revendications**

1. Procédé de mesure de la forme d'une fibre longitudinale d'une bande en défilement, telle qu'une bande métallique en cours de laminage, selon lequel on relève la vitesse de défilement $(V(t))$ de ladite bande et les altitudes $(Y_i)$ d'un ensemble de n points de rang (i) de ladite fibre dans un référentiel (xOy) prédéterminé, dont l'axe (Ox) est orienté selon la direction de défilement de ladite bande, et on détermine à partir desdites altitudes $(y_i)$ et de ladite vitesse $(V(t))$ une fonction $(y(l))$ dépendante de la forme de ladite fibre, caractérisé en ce que, lorsqu'on relève l'altitude du point de rang (i) de ladite fibre, situé à une distance (l) du point de rang l de ladite fibre mesurée sur l'axe (Ox), on relève simultanément les altitudes d'au moins deux autres points qui lui sont proches et sont situés de part et d'autre de lui, on calcule approximativement à l'aide desdites altitudes la courbure $(K(x)_i)$ de ladite fibre au voisinage dudit point de rang i, puis à l'aide des courbures calculées pour lesdits points, on détermine une fonction $(k(l))$ représentative de l'évolution de la courbure de ladite fibre entre lesdits points de rang l et de rang n, et par intégrations successives de ladite fonction $(k(l))$, on détermine une fonction $(Y(l))$ représentative de la forme propre de ladite fibre entre lesdits points de rang l et de rang n.

2. Procédé de mesure de la forme d'une bande en défilement, telle qu'une bande métallique en cours de laminage, selon lequel on mesure la forme d'un pluralité de fibres longitudinales de ladite bande, caractérisé en ce que lesdites formes sont mesurées par le procédé selon la revendication 1.

3. Procédé de mesure de la planéité d'une fibre longitudinale d'une bande en défilement, telle qu'une bande métallique en cours de laminage, selon lequel on relève la vitesse de défilement de ladite bande, et les altitudes $(y_i)$ d'un ensemble de n points de rang (i) de ladite fibre dans un référentiel (xOy) prédéterminé, dont l'axe (Ox) est orienté selon la direction de défilement de ladite bande, et on calcule approximativement d'après ces relevés la longueur (L) de ladite fibre entre le point de rang rang 1 et le point de rang n et la longueur (Lo) de sa projection sur ledit axe (Ox), et on calcule le taux d'allongement

$$\left( A_m = \frac{L - Lo}{Lo} \right)$$

de ladite fibre représentatif de sa planéité, caractérisé en ce qu'on détermine ladite fonction k(l) comme dans le procédé selon la revendication 1, et on calcule la longueur (L) de ladite fibre entre lesdits points de rang 1 et de rang n par intégrations successives de ladite fonction k(l).

4. Procédé de mesure de la planéité d'une bande en défilement, telle qu'une bande métallique en cours de laminage, selon lequel on mesure la planéité d'une pluralité de fibres longitudinales de ladite bande, caractérisé en ce qu'on mesure le taux d'allongement ($A_m$) de chacune desdites fibres par le procédé selon la revendication 3.

5. Procédé selon la revendication 4, caractérisé en ce qu'on mesure le taux d'allongement ($A_c$) de la fibre centrale de ladite bande, et en ce qu'on calcule l'indice de planéité ($P_m = \frac{A_m - A_c}{A_c}$) de chacune desdites fibres longitudinales.

6. Dispositif pour la mesure de la forme d'une fibre longitudinale d'une bande (3) en défilement, telle qu'une bande métallique en cours de laminage, du type comportant des moyens (8) pour relever les altitudes ($y_i$) d'une ensemble de n points de rang (i) de ladite fibre dans un référentiel (xOy) prédéterminé, des moyens (16) pour mémoriser lesdites altitudes ($y_i$), des moyens pour enregistrer en permanence la vitesse (V(t)) de ladite bande (3), et des moyens (16) pour déterminer, à partir desdites altitudes ($y_i$) et de ladite vitesse V(t), une fonction (y(l)) dépendante de la forme de ladite fibre, caractérisé en ce que les moyens (8) pour relever les altitudes ($y_i$) comprennent également des moyens pour relever simultanément les altitudes de au moins deux autres points de ladite fibre encadrant chaque point de rang i, et en ce qu'il comprend également des moyens (16) pour calculer la courbure ($K(x)_i$) de ladite fibre au voisinage de chaque point de rang i, des moyens pour déterminer à partir desdites courbures ($K(x)_i$) une fonction (k(l)) représentative de l'évolution de la courbure de ladite fibre entre lesdits points de rang l et de rang n, et des moyens (16) pour déterminer à partir de ladite fonction (k(l)) une fonction (Y(l)) représentative de la forme propre de ladite fibre.

7. Dispositif pour la mesure de la planéité d'une fibre longitudinale d'une bande (3) en défilement, telle qu'une bande métallique en cours de laminage, du type comportant des moyens (8) pour relever les altitudes ($y_i$) d'une ensemble de n points de rang (i) de ladite fibre dans un référentiel (xOy) prédéterminé, des moyens (16) pour mémoriser lesdites altitudes ($y_i$), des moyens pour enregistrer en permanence la vitesse (V(t)) de ladite bande (3), et des moyens (16) pour calculer approximativement, d'après ces altitudes, la longueur (L) de ladite fibre entre le point de rang l et le point de rang n et la longueur (Lo) de sa projection sur ledit axe Ox, de manière à pouvoir en déduire le taux d'allongement

$$\left[ A_m \;=\; \frac{L - Lo}{Lo} \right]$$

de ladite fibre représentatif de sa planéité, caractérisé en ce que les moyens (8) pour relever les altitudes ($y_i$) permettent de relever simultanément les altitudes d'au moins deux autres points de ladite fibre pour calculer lesdites longueurs (L) et (Lo) comprennent des moyens pour calculer la courbure ($K(x)_i$) de ladite fibre au voisinage de chaque point de rang i, des moyens pour déterminer à partir desdites courbures ($K(x)_i$) une fonction (k(l)) représentative de l'évolution de la courbure de ladite fibre entre lesdits points de rang 1 et de rang n, et des moyens (16) pour déterminer à partir de ladite fonction (k(l)) une fonction (Y(l)) représentative de la forme propre de ladite fibre.

8. Dispositif selon la revendication 6 ou 7, caractérisé en ce que lesdits moyens (8) pour relever les altitudes ($y_i$) comprennent un télémètre comportant au moins trois lasers (9, 10, 11) dont les faisceaux sont parallèles et dirigés sur ladite fibre longitudinale de ladite bande (3) et une caméra linéaire (15) orientée en direction des impacts (12, 13, 14) desdits faisceaux sur ladite bande (3).

9. Dispositif pour la mesure de la forme et/ou de la planéité d'une bande (3) en défilement, telle qu'une bande métallique en cours de laminage, du type comportant plusieurs dispositifs unitaires mesurant chacun la forme et/ou le taux d'allongement ($A_m$) d'une fibre longitudinale de ladite bande (3), caractérisé en ce que lesdits dispositifs sont du type selon l'une au moins des revendications 6 à 8.

10. Dispositif selon la revendication 9, caractérisé en ce que l'un desdits dispositifs unitaires mesure le taux d'allongement ($A_c$) de la fibre centrale de ladite bande (3), et en ce que lesdits dispositifs unitaires comportent des moyens pour calculer l'indice de planéité ($P_m$) de chacune desdites fibres longitudinales.

11. Dispositif selon l'une des revendications 6 à 10, caractérisé en ce que lesdits moyens (8) pour relever les altitudes ($y_i$) sont munis de moyens permettant de les déplacer selon une direction transversale à la direction de défilement de ladite bande (3).

**Patentansprüche**

1. Verfahren zur Messung der Form einer Längsfaser eines vorbeilaufenden Bandes wie eines in Walzung befindlichen Metallbandes, gemäß dem man die Durchlaufgeschwindigkeit (V(t)) des Bandes und die Höhen $(y_i)$ einer Gruppe von n Punkten vom Rang (i) der Faser in einem vorher festgelegten Bezugssystem (xOy) aufnimmt, dessen Achse (Ox) entlang der Durchlaufrichtung des Bandes ausgerichtet ist, und man anhand der Höhen $(y_i)$ und der Geschwindigkeit (V(t)) eine Funktion (y(l)) bestimmt, die von der Form der Faser abhängt, dadurch gekennzeichnet, daß, wenn man die Höhe des Punktes vom Rang (i) der Faser aufnimmt, der sich, gemessen auf der Achse (Ox), in einem Abstand (l) von dem Punkt vom Rang I der Faser befindet, man gleichzeitig die Höhen mindestens zweier weiterer Punkte aufnimmt, die sich nahe an diesem und auf beiden Seiten desselben befinden, man mittels dieser Höhen näherungsweise die Krümmung $(K(x)_i)$ der Faser in der Umgebung des Punktes vom Rang i berechnet, man dann mittels der für die Punkte berechneten Krümmungen eine Funktion (k(l)) bestimmt, die den Verlauf der Krümmung der Faser zwischen den Punkten vom Rang I und vom Rang n repräsentiert, und man durch aufeinanderfolgende Integrationen der Funktion (k(l)) eine Funktion (Y(l)) bestimmt, welche die Eigenform der Faser zwischen den Punkten vom Rang 1 und vom Rang n repräsentiert.

2. Verfahren zur Messung der Form eines vorbeilaufenden Bandes wie eines in Walzung befindlichen Metallbandes, gemäß dem man die Form einer Vielzahl von Längsfasern des Bandes mißt, dadurch gekennzeichnet, daß diese Formen mittels des Verfahrens nach Anspruch 1 gemessen werden.

3. Verfahren zur Messung der Ebenheit einer Längsfaser eines vorbeilaufenden Bandes wie eines in Walzung befindlichen Metallbandes, gemäß dem man die Durchlaufgeschwindigkeit des Bandes und die Höhen $(y_i)$ einer Gruppe von n Punkten vom Rang (i) der Faser in einem vorher festgelegten Bezugssystem (xOy) aufnimmt, dessen Achse (Ox) entlang der Durchlaufrichtung des Bandes ausgerichtet ist, und man anhand dieser Aufnahmen näherungsweise die Länge (L) der Faser zwischen dem Punkt vom Rang 1 und dem Punkt vom Rang n und die Länge (Lo) ihrer Projektion auf die Achse (Ox) berechnet, und man den Streckungsgrad

$$\left( A_m = \frac{L - Lo}{Lo} \right)$$

der Faser berechnet, der ihre Ebenheit repräsentiert, dadurch gekennzeichnet, daß man die Funktion k(l) wie in dem Verfahren nach Anspruch 1 bestimmt und man die Länge (L) der Faser zwischen den Punkten vom Rang 1 und vom Rang n durch aufeinanderfolgende Integrationen der Funktion k(l) berechnet.

4. Verfahren zur Messung der Ebenheit eines vorbeilaufenden Bandes wie eines in Walzung befindlichen Metallbandes, gemäß dem man die Ebenheit einer Vielzahl von Längsfasern des Bandes mißt, dadurch gekennzeichnet, daß man den Streckungsgrad $(A_m)$ jeder dieser Fasern mittels des Verfahrens nach Anspruch 3 mißt.

5. Verfahren nach Anspruch 4, dadurch gekennzeichnet, daß man den Streckungsgrad $(A_c)$ der Mittelfaser des Bandes mißt und daß man den Ebenheitswert

$$\left( P_m = \frac{A_m - A_C}{A_C} \right)$$

jeder Längsfaser berechnet.

6. Vorrichtung zur Messung der Form einer Längsfaser eines vorbeilaufenden Bandes (3) wie eines in Walzung befindlichen Metallbandes, von der Art mit Mitteln (8) zur Aufnahme der Höhen $(y_i)$ einer Gruppe von n Punkten vom Rang (i) der Faser in einem vorher festgelegten Bezugssystem (xOy), Mitteln (16) zur Speicherung dieser Höhen $(y_i)$, Mitteln zur ständigen Aufzeichnung der Geschwindigkeit (V(t)) des Bandes (3) und Mitteln (16) zur Bestimmung einer von der Form der Faser abhängigen Funktion (y(l)) anhand dieser Höhen $(y_i)$ und dieser Ge-

**EP 0 649 001 B1**

schwindigkeit (V(t)), dadurch gekennzeichnet, daß die Mittel (8) zur Aufnahme der Höhen (yi) ebenfalls Mittel zur gleichzeitigen Aufnahme der Höhen mindestens zweier weiterer Punkte der Faser, die jeden Punkt vom Rang i flankieren, enthalten und daß sie außerdem Mittel (16) zur Berechnung der Krümmung (K(x)i) der Faser in der Umgebung jedes Punktes vom Rang i, Mittel zur Bestimmung einer Funktion (k(l)), die den Verlauf der Krümmung der Faser zwischen den Punkten vom Rang 1 und vom Rang n repräsentiert, anhand dieser Krümmungen $(K(x)_i)$ und Mittel (16) zur Bestimmung einer Funktion (Y(l)), welche die Eigenform der Faser repräsentiert, anhand dieser Funktion (k(l)) umfaßt.

7. Vorrichtung zur Messung der Ebenheit einer Längsfaser eines vorbeilaufenden Bandes (3) wie eines in Walzung befindlichen Metallbandes, von der Art mit Mitteln (8) zur Aufnahme der Höhen $(y_i)$ einer Gruppe von n Punkten vom Rang (i) der Faser in einem vorher festgelegten Bezugssystem (xOy), Mitteln (16) zur Speicherung dieser Höhen $(y_i)$, Mitteln zur ständigen Aufzeichnung der Geschwindigkeit (V(t)) des Bandes (3) und Mitteln (16) zur näherungsweisen Berechnung, anhand dieser Höhen, der Länge (L) der Faser zwischen dem Punkt vom Rang 1 und dem Punkt vom Rang n und der Länge (Lo) ihrer Projektion auf die Achse (Ox), um hieraus den Streckungsgrad

$$\left( A_m \ = \ \frac{L - Lo}{Lo} \right)$$

der Faser, der ihre Ebenheit repräsentiert, berechnen zu können, dadurch gekennzeichnet, daß die Mittel (8) zur Aufnahme der Höhen (Yi) die gleichzeitige Aufnahme der Höhen mindestens zweier weiterer Punkte der Faser zur Berechnung der Längen (L) und (Lo) ermöglichen und Mittel (16) zur Berechnung der Krümmung (K(x)i) der Faser in der Umgebung jedes Punktes vom Rang i, Mittel zur Bestimmung einer Funktion (k(l)), die den Verlauf der Krümmung der Faser zwischen den Punkten vom Rang 1 und vom Rang n repräsentiert, anhand dieser Krümmungen $(K(x)_i)$ und Mittel (16) zur Bestimmung einer Funktion (Y(l)), welche die Eigenform der Faser repräsentiert, anhand dieser Funktion (k(l)) umfassen.

8. Vorrichtung nach Anspruch 6 oder 7, dadurch gekennzeichnet, daß die Mittel (8) zur Aufnahme der Höhen $(y_i)$ einen Entfernungsmesser mit mindestens drei Lasern (9, 10, 11), deren Strahlen parallel und auf die Längsfaser des Bandes (3) gerichtet sind, und eine lineare Kamera (15) umfassen, die in Richtung der Aufschlagstellen (12, 13, 14) dieser Strahlen auf dem Band (3) ausgerichtet ist.

9. Vorrichtung zur Messung der Form und/oder der Ebenheit eines vorbeilaufenden Bandes (3) wie eines in Walzung befindlichen Metallbandes, von der Art mit mehreren Einheitsvorrichtungen, die jeweils die Form und/oder den Streckungsgrad $(A_m)$ einer Längsfaser des Bandes (3) messen, dadurch gekennzeichnet, daß diese Vorrichtungen von der Art nach mindestens einem der Ansprüche 6 bis 8 sind.

10. Vorrichtung nach Anspruch 9, dadurch gekennzeichnet, daß eine der Einheitsvorrichtungen den Streckungsgrad $(A_c)$ der Mittelfaser des Bandes (3) mißt und daß die Einheitsvorrichtungen Mittel zur Berechnung des Ebenheitswertes $(P_m)$ jeder Längsfaser enthalten.

11. Vorrichtung nach einem der Ansprüche 6 bis 10, dadurch gekennzeichnet, daß die Mittel (8) zur Aufnahme der Höhen (Yi) mit Mitteln versehen sind, die ihre Verschiebung entlang einer Richtung quer zur Durchlaufrichtung des Bandes (3) ermöglichen.

**Claims**

1. Procedure for measuring the shape of a longitudinal fibre of a moving strip, such as a metal strip during rolling, in which the speed of movement (V(t)) of the said strip and the heights $(y_i)$ of a set of n points of row (i) of the said fibre in a predetermined reference frame (xOy), the axis (Ox) of which is oriented in the direction of movement of the said strip, are read and a function (y(l)) dependent on the shape of the said fibre is determined from the said heights $(y_i)$ and from the said speed (V(t)), characterized in that, when the height of the point of row (i) of the said fibre, lying at a distance (l) from the point of row 1 of the said fibre measured along the axis (Ox) is read, the heights of at least two other points, which are close to it and lie on either side of it, are read simultaneously, the curvature $(K(x)_i)$ of the said fibre in the vicinity of the said point of row i is calculated approximately using the said heights, then a function (k(l)) representative of the change in the curvature of the said fibre between the said points of row 1 and of row n is determined using the curvatures calculated for the said points, and a function (Y(l)) representative of the actual shape of the said fibre between the said points of row 1 and of row n is determined by successive integrations of the said function (k(l)).

2. Procedure for measuring the shape of a moving strip, such as a metal strip during rolling, in which the shape of a plurality of longitudinal fibres of the said strip is measured, characterized in that the said shapes are measured using the procedure according to Claim 1.

3. Procedure for measuring the surface flatness of a longitudinal fibre of a moving strip, such as a metal strip during rolling, in which the speed of movement of the said strip and the heights ($y_i$) of a set of n points of row (i) of the said fibre in a predetermined reference frame (xOy), the axis (Ox) of which is oriented in the direction of movement of the said strip, are read and the length (L) of the said fibre between the point of row 1 and the point of row n and the length (Lo) of its projection on the said axis (Ox) are calculated approximately from these readings and the degree of elongation ($A_m = [L - Lo]/Lo$) of the said fibre representative of its surface flatness is calculated, characterized in that the said function k(l) is determined as in the procedure according to Claim 1 and the length (L) of the said fibre between the said points of row 1 and of row n is calculated by successive integrations of the said function k(l).

4. Procedure for measuring the surface flatness of a moving strip, such as a metal strip during rolling, in which the surface flatness of a plurality of longitudinal fibres of the said strip is measured, characterized in that the degree of elongation ($A_m$) of each of the said fibres is measured using the procedure according to Claim 3.

5. Procedure according to Claim 4, characterized in that the degree of elongation ($A_c$) of the central fibre of the said strip is measured and in that the surface flatness index ($P_m = [A_m - A_c]/A_c$) of each of the said longitudinal fibres is calculated.

6. Device for measuring the shape of a longitudinal fibre of a moving strip (3), such as a metal strip during rolling, of the type including means (8) for reading the heights ($y_i$) of a set of n points of row (i) of the said fibre in a predetermined reference frame (xOy), means (16) for storing the said heights ($y_i$), means for continuously reading the speed (V(t)) of the said strip (3) and means (16) for determining a function (y(l)) dependent on the shape of the said fibre from the said heights ($y_i$) and from the said speed (V(t)), characterized in that the means (8) for reading the heights ($y_i$) also comprise means for simultaneously reading the heights of at least two other points of the said fibre which flank each point of row i and in that it also comprises means (16) for calculating the curvature ($K(x)_i$) of the said fibre in the vicinity of each point of row i, means for determining a function (k(l)) representative of the change in the curvature of the said fibre between the said points of row 1 and of row n from the said curvatures ($K(x)_i$) and means (16) for determining a function (Y(l)) representative of the actual shape of the said fibre from the said function (k(l)).

7. Device for measuring the surface flatness of a longitudinal fibre of a moving strip (3), such as a metal strip during rolling, of the type including means (8) for reading the heights ($y_i$) of a set of n points of row (i) of the said fibre in a predetermined reference frame (xOy), means (16) for storing the said heights ($y_i$) in memory, means for continuously reading the speed (V(t)) of the said strip (3) and means (16) for calculating approximately the length (L) of the said fibre between the point of row 1 and the point of row n and the length (Lo) of its projection on the said axis Ox from these heights so as to be able to deduce therefrom the degree of elongation ($A_m = [L - Lo]/Lo$) of the said fibre representative of its surface flatness, characterized in that the means (8) for reading the heights ($y_i$) allow simultaneous reading of the heights of at least two other points on the said fibre in order to calculate the said lengths (L) and (Lo) and comprise means for calculating the curvature ($K(x)_i$) of the said fibre in the vicinity of each point of row i, means for determining a function (k(l)) representative of the change in the curvature of the said fibre between the said points of row 1 and of row n from the said curvatures ($K(x)_i$) and means (16) for determining a function (Y(l)) representative of the actual shape of the said fibre from the said function (k(l)).

8. Device according to Claim 6 or 7, characterized in that the said means (8) for reading the heights ($y_i$) comprise a rangefinder having at least three lasers (9, 10, 11), the beams of which are parallel and directed onto the said longitudinal fibre of the said strip (3), and a linear camera (15) oriented towards the points of impact (12, 13, 14) of the said beams on the said strip (3).

9. Device for measuring the shape and/or the surface flatness of a moving strip (3), such as a metal strip during rolling, of the type including several individual devices each measuring the shape and/or the degree of elongation

$(A_m)$ of a longitudinal fibre in the said strip (3), characterized in that the said devices are of the type according to at least one of Claims 6 to 8.

10. Device according to Claim 9, characterized in that one of the said individual devices measures the degree of elongation $(A_c)$ of the central fibre of the said strip (3) and in that the said individual devices include means for calculating the surface flatness index $(P_m)$ of each of the said longitudinal fibres.

11. Device according to one of Claims 6 to 10, characterized in that the said means (8) for reading the heights $(y_i)$ are provided with means allowing them to move in a direction transverse to the direction of movement of the said strip (3).

Fig.-1-

Fig.-2-